Europäisches Patentamt

European Patent Office

Office européen des brevets

(19)

(11) Publication number: **0 043 234**
**B1**

(12) **EUROPEAN PATENT SPECIFICATION**

(45) Date of publication of patent specification: **26.10.83**

(51) Int. Cl.³: **B 29 F 1/022, H 05 B 3/10**

(21) Application number: **81302849.5**

(22) Date of filing: **24.06.81**

(54) A pointed heat-generating device for molds of injection molding machines.

(30) Priority: **25.06.80 JP 88001/80 U**

(43) Date of publication of application:
**06.01.82 Bulletin 82/1**

(45) Publication of the grant of the patent:
**26.10.83 Bulletin 83/43**

(84) Designated Contracting States:
**CH DE FR GB IT LI NL**

(56) References cited:
**FR - A - 2 125 496**
**US - A - 3 911 251**

(73) Proprietor: **Tsutsumi, Shigeru**
**1165, Toyama-cho**
**Yonezawa-shi Yamagata-ken (JP)**

(73) Proprietor: **SEIKI ENGINEERING & RESEARCH CO.**
**LTD.**
**No. 4364, Katako Bansei-cho**
**Yonezawa-shi Yamagata-ken (JP)**

(72) Inventor: **Yoshida, Yoshiichi**
**2078, Nakada-cho**
**Yonezawa-shi Yamagata-ken (JP)**

(74) Representative: **Huntingford, David Ian et al,**
**W.P. THOMPSON & CO. Coopers Building Church**
**Street**
**Liverpool L1 3AB (GB)**

Courier Press, Leamington Spa, England.

## A pointed heat-generating device for molds of injection molding machines

The invention relates to a pointed heat-generating device for molds of injection molding machines according to the first part of claim 1.

The pointed heat-generating device is used widely for runnerless injection molding machines in order to fuse instantaneously synthetic resin existing at an injection gate communicating with a cavity of the molds, to open the injection gate and to inject the fused synthetic resin into the cavity.

A conventional pointed heat-generating device for molds of injection molding machines is disclosed in US—A—3,800,027.

The above conventional heat-generating device is provided at its pointed end with such a heat-generating wire, such as a nichrome wire, wherein the heat-generating wire is energised intermittently in synchronization with an injection molding cycle. When carrying out an injection molding of glass fiber containing synthetic resins in accordance with this process, the heat-generating wire is inclined to become worn. In order to reinforce its wear resistance, there is also known a twice-folded nichrome wire for use as the heat-generating member. However, the heat-generating effect of the twice-folded nichrome wire is inferior to the aforementioned normal one.

For the purpose of removing the aforegoing disadvantages of the prior art, the inventor of the subject matter of the present European Patent Application invented a pointed heat-generating device as shown in Fig. 1 of the accompanying drawings. It is disclosed in Japanese Unexamined Utility Model Publication No. 56—55631 (corresponding to Japanese Utility Model Application No. 54—136755) which was laid open for public inspection on May 14, 1981.

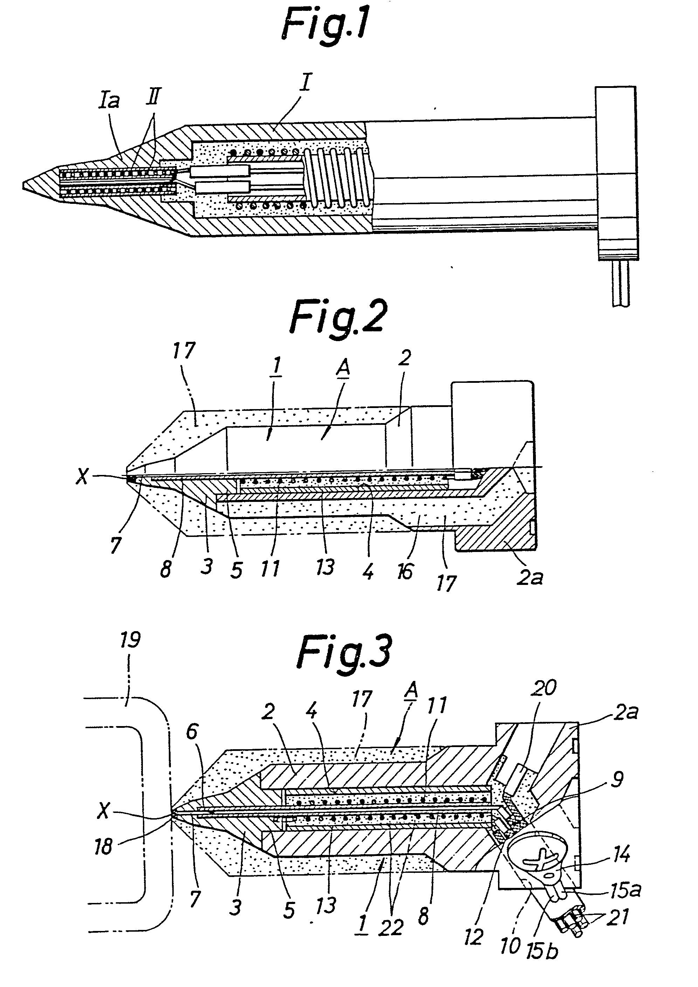

In Fig. 1, there is mounted a coiled heat-generating means II within a pointed section Ia of a heat-generating device I. Its heat generation is quite sufficient and its wear resistance is also improved. Nevertheless, the pointed section Ia is of large size and the heat-generating device I itself is elongated. Accordingly, a heating response due to the increase of heat capacity and a cooling response due to a switching operation are not carried out efficiently.

The present invention is intended to remove the above disadvantages. It provides a pointed heat-generating device for molds of injection molding machines, whereby particularly precise parts can be molded. The pointed heat-generating device includes a metal casing, a pointed heat-generating means fixed to the metal casing and a gate communicating with a cavity of the mold, wherein a heat-generating wire is introduced into a passage which is bored in an unmachined cylindrical material and an alloy portion is formed in an inert gas atmosphere between an end of the heat-generating wire and the unmachined cylindrical material, whereby the alloy portion can be formed as a pointed part of the heat-generating means by subsequent machining. This pointed heat-generating means has an excellent wear resistance. Furthermore, it is of small-size and its heat capacity is smaller. Accordingly, the heating and cooling of synthetic resin at the gate can be carried out relatively rapidly.

The invention will be further described, by way of preferred examples, with reference to the accompanying drawings, in which:

Fig. 1 is a partially cutaway front view of a known pointed heat-generating device for molds of injection molding machines;

Fig. 2 is a partially cutaway transverse section view of one embodiment of a pointed heat-generating device in accordance with the present invention for molds of injection molding machines;

Fig. 3 is a partially cutaway longitudinal section view of the device of Fig. 2;

Fig. 4 is a right side view of the device of Fig. 2;

Fig. 5 is a view of a heat-generating wire inserted in a passage bored in an unmachined cylindrical material;

Fig. 6 is an enlarged section view of an alloy portion formed as a pointed part of a device according to this invention;

Fig. 7 is a partially cutaway transverse section view of other example of a pointed heat-generating device in accordance with this invention;

Fig. 8 is a partially cutaway longitudinal section view of the device of Fig. 7;

Fig. 9 is a right side view of the device of Fig. 8;

Fig. 10 is an enlarged section view of the pointed heat-generating means;

A first example of this invention will be described with reference to Figs. 2 to 6.

A heat-generating device A comprises a body 1, a metal casing 2 having a base 2a, and a pointed heat-generating means 3. The device A as a whole is of a projectile shape. The metal casing 2 is made of a heat-proof metal such as e.g. stainless steel. It has a cylindrical inner wall 4. The heat-generating means 3 is pointed and of generally conical shape. It is provided, at its rear end, with a cylindrical fitting portion 5 for receiving and fitting the metal casing 2. An axially directed passage 6 is formed in the heat-generating means 3. A heat-generating wire 7, such as e.g. a nichrome wire, is inserted into the passage 6 until its end reaches a pointed end of the heat-generating means 3. The latter end portion of the heat-generating means 3 forms an alloy portion X having a wear resistance which is substantially the same as that of the material of the heat-generating means 3.

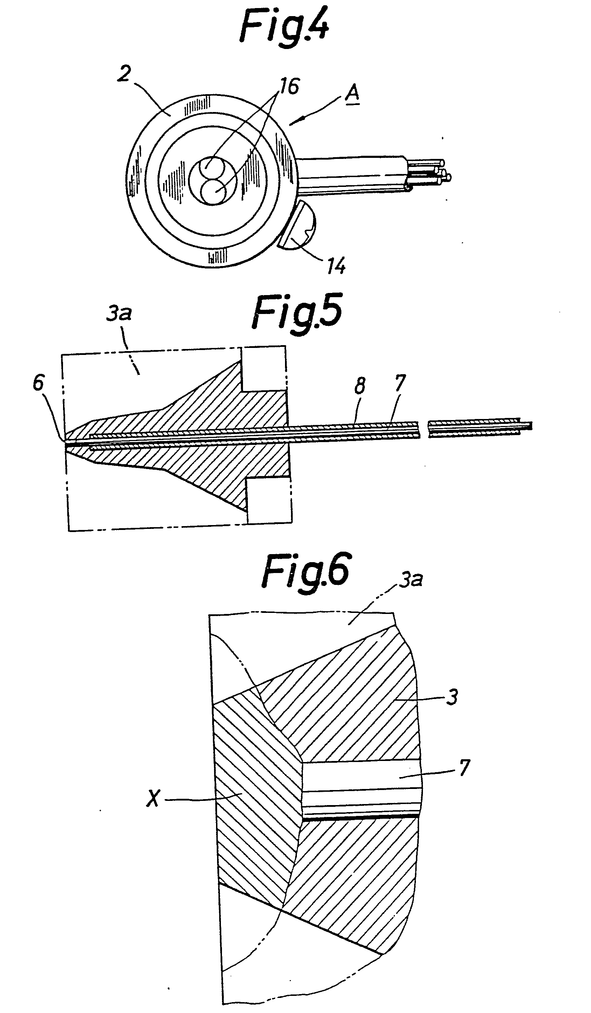

The manner in which the alloy portion X is formed will now be described. As shown in a dot-and-dash line in Fig. 5 there is formed an unmachined cylindrical material 3a.

First of all, the passage 6 is bored in the unmachined cylindrical material 3a, and the heat-generating wire 7 in inserted into the passage 6. An end portion of the unmachined cylindrical material 3a and an end of the heat-generating wire 7 are fused locally and united to each other in an inert gas such as argon so as to be converted into an integral part, that is the alloy portion X, by means of arcing.

Thus, the alloy portion X has nearly same wear-resistant property as the heat-generating means 3. The pointed heat-generating means 3 having the alloy portion X at its point is then formed by machining the cylindrical material 3a. As a result, the size of the heat-generating means 3 is reduced and its heat capacity becomes smaller.

The heat-generating wire 7 extends through the cylindrical inner wall 4 and covered by e.g. an alumina insulating tube 8 which is inserted into the enlarged passage 6. Since heat conductivity of the heat-generating wire 7 is secured sufficiently, the pointed part of the heat-generating portion 3 maintains a sufficient heating effect by way of the heat-generating wire 7. The other end of the wire 7 is connected to a lead wire 9 at one end of the alumina tube 8 and is connected to an external circuit by way of a guide opening 10 provided at a rear end of the metal casing 2.

The exterior of the alumina tube 8 is surrounded by a coiled second heat-generating wire 11. One end of the second heat-generating wire 11 is connected to the fitting portion 5, while the other end thereof is connected to a lead wire 12 by way of the guide opening 10.

The second heat-generating wire 11 is electrically insulated by a second alumina tube 13 fitted within the inner wall 4, but it maintains a sufficient heat conductivity. The first and second heat-generating wires 7 and 11 are respectively connected to the pointed heat-generating means 3 and the metal casing 2. The rear end of the metal casing 2 is provided with a terminal 14 which is connected to two lead wires 15a, 15b. The latter wires connected to an external circuit through the guide opening 10.

Reference numeral 16 identifies a pair of supply paths for supplying synthetic resin and which are disposed in parallel with each other in the axial direction of the metal casing 2. Numeral 17 identifies synthetic resin in said supply paths. Numeral 18 identifies an injection gate. Numeral 19 identifies a cavity. Numeral 20 identifies a temperature sensor. Numeral 21 identifies a lead wire for the temperature sensor 21. Numeral 22 identifies an insulating material such as magnesium hydroxide which is provided within the metal casing.

One function of the pointed heat-generating device according to the first example will now be described. Heat generated by energizing the wire 11 is conducted in turn to the insulating tube 13 and the metal casing 2. As a result, the synthetic resin 17 covering the metal casing 2 as well as the pointed heat-generating means 3, and the synthetic resin 17 provided in the supply paths 16 are all fused. As described previously, since the pointed part of the heat-generating means 3 and the heat-generating wire 7 form an integral structure, that is the alloy portion X, it has excellent rigidity and wear resistance. Accordingly, the alloy portion X is formed so as to be of small size so that its heat capacity is correspondingly small.

Further, the pointed heat-generating device of the invention can be used effectively for such a narrow gate 18. By turning off the power source which energizes the heat-generating wire 7, the fused synthetic resin is cooled immediately and solidified. Conversely, by turning on the power source, the resin is heated immediately and fused. Due to an ON—OFF switching of the power source, the synthetic resin 17 at the gate 18 can be fused or solidified, in response to which the gate 18 is opened or closed. Thus, a very accurate injection molding operation is obtainable.

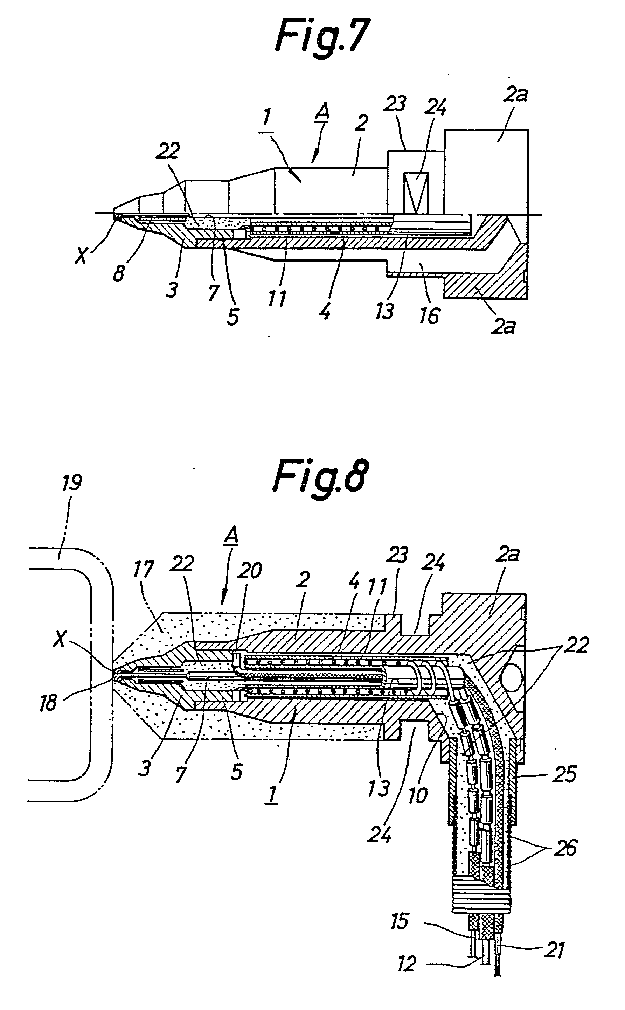

A second example of this invention will now be described with reference to Figs. 7 to 10. When the numerals in the second example are the same ones as the first example, their description will be omitted.

The metal casing 2 is provided with a portion 23 adjacent the base 2a. The portion 23 is provided with a pair of slit grooves 24 at its upper side and lower side to enable the cooling effect of mold cooling water to be reduced, while the winding density of the second heat-generating wire 11 is increased in the proximity of this portion 23 for the same purpose. Thus, by raising locally the temperature of heat generation, it is possible to reduce the cooling effect of the cooling water.

Numeral 25 denotes a protective tube for protecting the lead wires, the protective tube 25 being fixed to the guide opening 10. An end of the protective tube 25 is fixed to a coil spring 26.

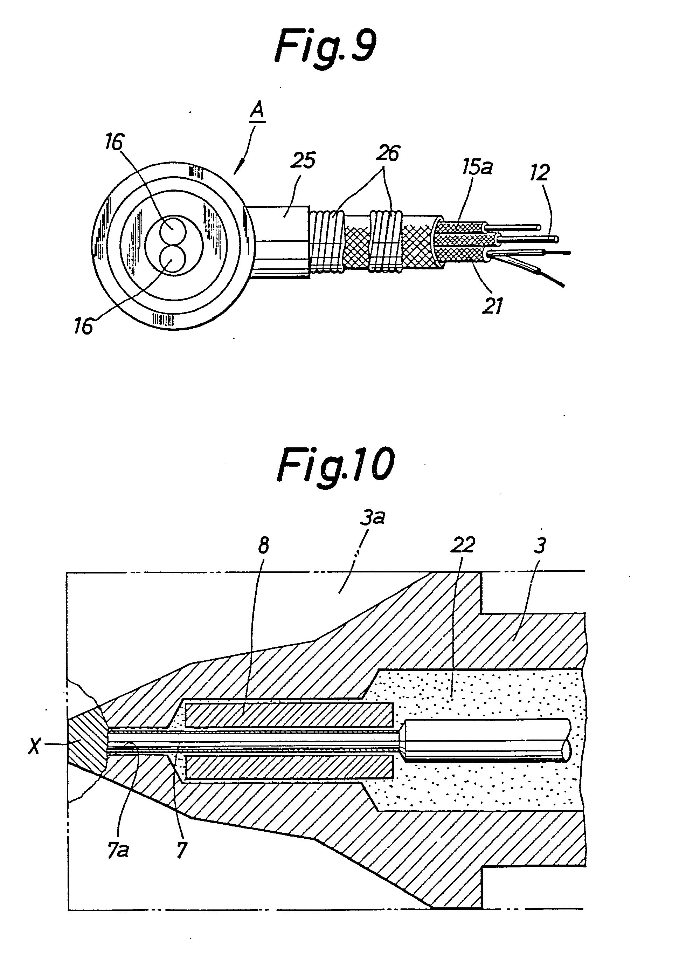

The alloy portion X shown in Fig. 10 is basically formed in the same manner as shown in Fig. 5. In the second example a shorter insulating tube 8 is used and an oxide layer 7a is coated on the exterior of the heat-generating wire in the region of the pointed end in order further to enhance insulation thereof.

Further, by mounting the sensor 20 at one end of the heat-generating means 3, it is possible to control the temperature in the proximity of the heat-generating means 3. In this example, only four lead wires are used.

In the abovedescribed devices, the alloy portion formed at the pointed part of the heat-generating means has an excellent wear resistance to the flow of the fused synthetic resin, particularly a fused fiber-containing synthetic resin and durability of the heat-generating means is thereby considerably extended. Furthermore, since the alloy portion is formed so as to have a small size by accurate machining, it is very suitable for molding precise plastics products. Further, since the heat capacity of the heat-generating means is reduced, the synthetic resin at the injection gate may be heated or cooled rapidly.

## Claims

1. A pointed heat-generating device for molds of injection molding machines comprising a metal casing (2), a pointed projectile-shaped heat-generating means (3) fixed relative to the metal casing, and a gate (18) formed at the pointed heat-generating means and communicating with a cavity (19) of the mold, a synthetic resin material being fused or cooled or solidified at the gate by selected electrical energisation or de-energisation of the pointed heat-generating means, whereby the gate is selectably opened or closed, characterized in that a heat-generating wire (7) is inserted into a passage (6) which is bored in an unmachined cylindrically shaped material (3a), and, in an inert gas atmosphere, an alloy portion (X) is formed between an end of the heat-generating wire and the unmachined cylindrical material, whereby the alloy portion can be formed as a pointed part of the heat generating means (3) by subsequent machining.

2. A pointed heat-generating device for molds of injection molding machines as claimed in claim 1, in which the heat-generating wire (7), integrally united to the alloy portion (X), passes through the inside of the metal casing (2) and is connected to a lead wire (12), whereby the pointed heat-generating means (3) is capable of being energized by a power source connected to the lead wire.

3. A pointed heat-generating device for molds of injection molding machines as claimed in claim 1 or 2, in which the heat-generating wire (7) connected to the pointed heat-generating means (3) is, on its outer circumference, surrounded by a second heat-generating wire (11) for heating and fusing synthetic resin (17) on an outer surface of the metal casing (2).

4. A pointed heat-generating device for molds of injection molding machines as claimed in claim 1, 2 or 3 in which the metal casing (2) is provided with a pair of supply paths (16) for supplying synthetic resin (17), the pair of supply paths being disposed in parallel with each other axially of the metal casing.

5. A pointed heat-generating device for molds of injection molding machines as claimed in any of claims 1 to 4, in which the metal casing (2) is provided with a portion (23) adjacent a base (2a) of the metal casing, the portion (23) being provided with a pair of slit grooves (24) at its upper side and lower side in order to reduce the cooling effect of mold cooling water, and the winding density of the second heat-generating wire (11) being increased in the proximity of the portion (23) for the same purpose.

## Revendications

1. Dispositif de production de chaleur à extrémité pointue, pour moules de machines à mouler par injection, comprenant une enveloppe métallique (2), un moyen de production de chaleur d'extrémité pointue, en forme de projectile (3) fixé à une extrémité de cette enveloppe et une porte de sortie (18) formée à la pointe du moyen de production de chaleur et communiquant avec une cavité (19) du moule, une résine synthétique étant fondue ou refroidie ou solidifiée à cette porte par alimentation électrique du moyen de production de chaleur ou suppression de cette alimentation, grâce à quoi la porte de sortie est sélectivement ouverte ou fermée, caractérisé par le fait qu'un fil générateur de chaleur (7) est introduit dans un conduit (6) percé dans un bloc cylindrique non usiné (3a), puis, dans une atmosphère inerte, une partie en alliage (X) est formée entre l'extrémité du fil générateur de chaleur et le bloc cylindrique non usiné, grâce à quoi cette partie en alliage peut ensuite, par usinage, être taillée pour former la pointe du moyen de production de chaleur (3).

2. Dispositif de production de chaleur à extrémité pointue pour moules de machines à mouler par injection, selon la revendication 1, dans lequel le fil générateur de chaleur (7), fondu dans la partie en alliage (X), traverse l'intérieur de l'enveloppe métallique (2) et est connecté à un conducteur (12), grâce à quoi le moyen de production de chaleur (3) peut être alimenté par une alimentation connectée audit conducteur.

3. Dispositif de production de chaleur à extrémité pointue pour moules de machines de moulage par injection selon l'une des revendications 1 et 2, dans lequel, autour du fil générateur de chaleur (7) connecté au moyen de production de chaleur (3), est enroulé un deuxième fil générateur de chaleur (11) destiné à chauffer et faire fondre la résine synthétique (17) autour de l'enveloppe métallique (2).

4. Dispositif de production de chaleur à extrémité pointue pour moules de machine de moulage par injection, selon l'une des revendications 1 à 3, dans lequel l'enveloppe métallique (2) est pourvue de deux voies (16) d'amenée de résine synthétique (17) qui sont parallèles à l'axe de l'enveloppe métallique.

5. Dispositif de production de chaleur à extrémité pointue pour moules de machines de moulage par injection, selon l'une des revendications 1 à 4, dans lequel l'enveloppe métallique (2) est pourvue d'un gradin (23) contigu à son embase (2a), qui est pourvu à sa partie supérieure et sa partie inférieure d'une gorge (24) destinée à réduire l'effet refroidissant de l'eau de refroidissement du moule et, dans le même but, la densité d'enroulement du deuxième fil générateur de chaleur (11) est augmentée à proximité du gradin (23).

**Patentansprüche**

1. Zugespitzte Wärmeerzeugungsvorrichtung für Formen von Spritzgießmaschinen, welche ein Metallgehäuse (2), eine zugespitzte, projektilförmige wärmeerzeugende Einrichtung (3), die bezüglich des Metallgehäuses befestigt ist, und ein Tor (18) aufweist, das an der zugespitzten wärmeerzeugenden Einrichtung ausgebildet ist und mit einem Hohlraum (19) der Form in Verbindung steht, wobei ein Kunstharzmaterial an dem Tor durch ausgewählte elektrische Erregung oder Entregung der zugespitzten wärmeerzeugenden Einrichtung geschmolzen oder gekühlt oder verfestigt wird, wodurch das Tor wahlweise geöffnet oder geschlossen wird, dadurch gekennzeichnet, daß in einen Durchgang (6), der in ein nicht spanend bearbeitetes zylindrisch geformtes Material (3a) gebohrt ist, ein wärmeerzeugender Draht (7) eingeführt ist, und daß in einer Inertgasatmosphäre ein Legierungsabschnitt (X) zwischen einem Ende des wärmeerzeugenden Drahts und dem nicht spanend bearbeiteten zylindrischen Material ausgebildet ist, wodurch der Legierungsabschnitt als zugespitzter Teil der wärmeerzeugenden Einrichtung (3) durch darauffolgende spanende Bearbeitung ausgebildet werden kann.

2. Zugespitzte Wärmeerzeugungsvorrichtung für Formen von Spritzgießmaschinen nach Anspruch 1, bei welcher der wärmeerzeugende Draht (7), der in einem Stück mit dem Legierungsabschnitt (X) vereinigt ist, durch die Innenseite des Metallgehäuses (2) hindurchgeht und mit einem Leiterdraht (12) verbunden ist, wodurch die zugespitzte wärmeerzeugende Einrichtung (3) durch eine Energiequelle erregt werden kann, die mit dem Leiterdraht verbunden ist.

3. Zugespitzte Wärmeerzeugungsvorrichtung für Formen von Spritzgießmaschinen nach Anspruch 1 oder 2, bei welcher der wärmeerzeugende Draht (7), der mit der zugespitzten wärmeerzeugenden Einrichtung (3) verbunden ist, an seinem Außenumfang von einem zweiten wärmeerzeugenden Draht (11) zum Erwärmen und Schmelzen von Kunstharz (17) auf einer Außenfläche des Metallgehäuses (2) umgeben ist.

4. Zugespitzte Wärmeerzeugungsvorrichtung für Formen von Spritzgießmaschinen nach Anspruch 1, 2 oder 3, bei welcher das Metallgehäuse (2) mit einem Paar von Zuführwegen (16) versehen ist, um Kunstharz (17) zuzuführen, wobei des Paar von Zuführwegen parallel zueinander und axial zum Metallgehäuse angeordnet ist.

5. Zugespitzte Wärmeerzeugungsvorrichtung für Formen von Spritzgießmaschinen nach einem der Ansprüche 1 bis 4, bei welcher das Metallgehäuse (2) mit einem Abschnitt (23) angrenzend an eine Basis (2a) des Metallgehäuses versehen ist, wobei der Abschnitt (23) mit einem Paar von Schlitznuten (24) an seiner Oberseite und Unterseite versehen ist, um die Kühlwirkung von die Form kühlendem Wasser zu reduzieren, und wobei die Wicklungsdichte des zweiten wärmeerzeugenden Drahts (11) in der Nähe des Abschnitts (23) für den gleichen Zweck gesteigert wird.

# Fig.1

# Fig.2

# Fig.3

0 043 234

# Fig.4

# Fig.5

# Fig.6

2

# Fig.7

# Fig.8

# Fig.9

# Fig.10